# EUROPEAN PATENT APPLICATION

(11) **EP 4 797 363 A1**
(43) Date of publication of application: **26.08.2026**
(21) Application number: 26159513.6
(22) Date of filing: 19.02.2026
(51) Int. Cl.: H01M 8/04007, H01M 8/04029, H01M 8/249

(54) **ELECTROCHEMICAL CELL SYSTEM INCLUDING A HEAT RECOVERY UNIT WITH EXHAUST BACKFLOW PREVENTION**

(30) Priority: 24.02.2025 US 202563762509 P
(71) Applicant: Bloom Energy Corporation, San Jose, CA 95134 (US)
(72) Inventor: PMSVVSV, Prasad, San Jose, CA 95134 (US); ZUEGER, Reto, San Jose, CA 95134 (US); PENNA, Lorenzo, San Jose, CA 95134 (US)
(74) Representative: Wichmann, Hendrik

(57) **Abstract**

A method of operating an electrochemical cell system includes operating a plurality of power modules each containing at least one stack of electrochemical cells, and outputting a system exhaust from each of the plurality of power modules, providing the system exhaust from each of the plurality of the power modules to a respective exhaust compartment to exchange heat with a heat exchange fluid, and venting the system exhaust from the respective exhaust compartment to atmosphere.

## Description

### FIELD

Aspects of the present invention relate to electrochemical cell systems, and more particularly, to fuel cell systems including a heat recovery unit which prevents exhaust backflow into the fuel cell system.

### BACKGROUND

Fuel cells, such as solid oxide fuel cells, are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels, or hydrogen containing fuels, such as ammonia. There are classes of fuel cells, such as solid oxide regenerative fuel cells, that also allow reversed operation, such that oxidized fuel can be reduced back to unoxidized fuel using electrical energy as an input.

### SUMMARY

According to various embodiments, an electrochemical cell system comprises power modules comprising one or more stacks of electrochemical cells; heat exchangers fluidly connected to exhaust outlet conduits of the respective power modules, wherein each heat exchanger is fluidly connected only to one of the power modules, and each heat exchanger is configured to receive system exhaust output by only one of the power modules; an inlet conduit configured to provide a relatively cold fluid to the heat exchangers; and an outlet conduit configured to receive a relatively hot fluid from the heat exchangers.

According to various embodiments, an electrochemical cell system comprises a plurality of power modules, each comprising one or more stacks of electrochemical cells and at least one exhaust outlet conduit; and a heat recovery unit fluidly connected to the exhaust outlet conduits of the power modules. The heat recovery unit comprises: exhaust compartments fluidly connected to at least one exhaust outlet of only one of the plurality of power modules, and configured to receive system exhaust output from only the one of the plurality of power modules; at least one heat exchange conduit extending through the exhaust compartments; an inlet conduit configured to provide a relatively cool fluid to the at least one heat exchange conduit; and an outlet conduit configured to receive a relatively hot fluid from the at least one heat exchange conduit.

According to various embodiments, a method of operating an electrochemical cell system includes operating a plurality of power modules each containing at least one stack of electrochemical cells, and outputting a system exhaust from each of the plurality of power modules, providing the system exhaust from each of the plurality of the power modules to a respective exhaust compartment to exchange heat with a heat exchange fluid, and venting the system exhaust from the respective exhaust compartment to atmosphere.

### BRIEF DESCRIPTION OF THE DRAWINGS

The accompanying drawings, which are incorporated herein and constitute part of this specification, illustrate example embodiments of the invention, together with the general description given above and the detailed description given below.
FIG. 1A is a perspective view of an electrochemical cell system with a heat recovery unit, according to various embodiments of the present disclosure, and FIG. 1B is a schematic view of components of a power module that may be included in the system of FIG. 1A.
FIG. 2A is a side view of a heat recovery unit, according to various embodiments of the present disclosure, FIG. 2B is a cross-sectional view taken along line L1 of FIG. 2A, and FIG. 2C is a perspective view showing elements of the system of FIG. 2A.
FIG. 3A is a cross-sectional view of a modified heat recovery unit, according to an alternative embodiment of the present disclosure, and FIG. 3B is a perspective view showing elements of the system of FIG. 3A.
FIG. 4A is a top view showing heat exchange conduits and exhaust chambers, according to various embodiments of the present disclosure, and FIG. 4B is a top view showing exhaust chambers and heat exchange conduits having an alternative configuration, according to various embodiments of the present disclosure.
FIG. 5A is a perspective view of an electrochemical cell system, according to an alternative embodiment of the present disclosure, and FIG. 5B shows the backside of a power module of FIG. 5A.
FIG. 6A is a perspective view showing an electrochemical cell system including an alternative heat recovery unit, according to another alternative embodiment of the present disclosure, and FIG. 6B shows the top of a power module of FIG. 6A.

### DETAILED DESCRIPTION

Various examples will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims. It is also understood that the examples shown in the figures are not mutually exclusive. Features shown in one example (e.g., in one figure) may be included in other examples (e.g., in other figures).

Ranges can be expressed herein as from "about" one particular value, and/or to "about" another particular value. When such a range is expressed, examples include from the one particular value and/or to and including the other particular value. In some embodiments, a value of "about X" may include values of +/- 1% X. It will be further understood that the endpoints of each of the ranges are significant both in relation to the other endpoint, and independently of the other endpoint.

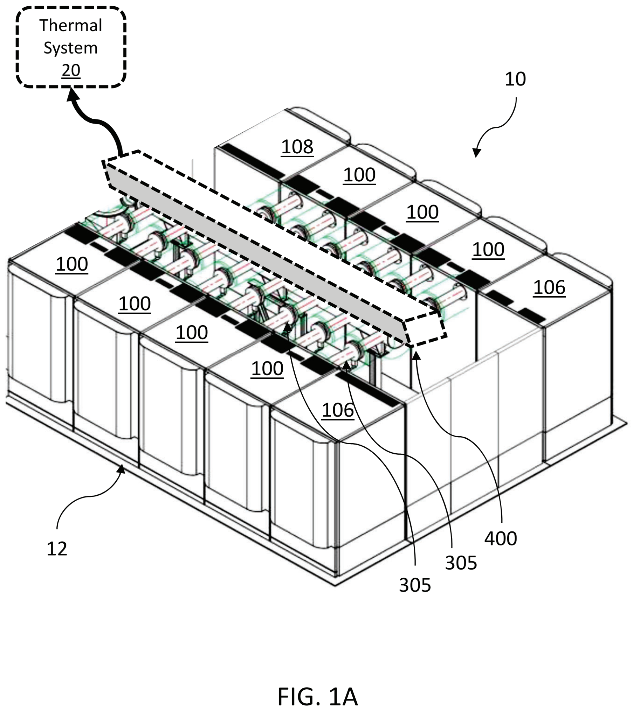

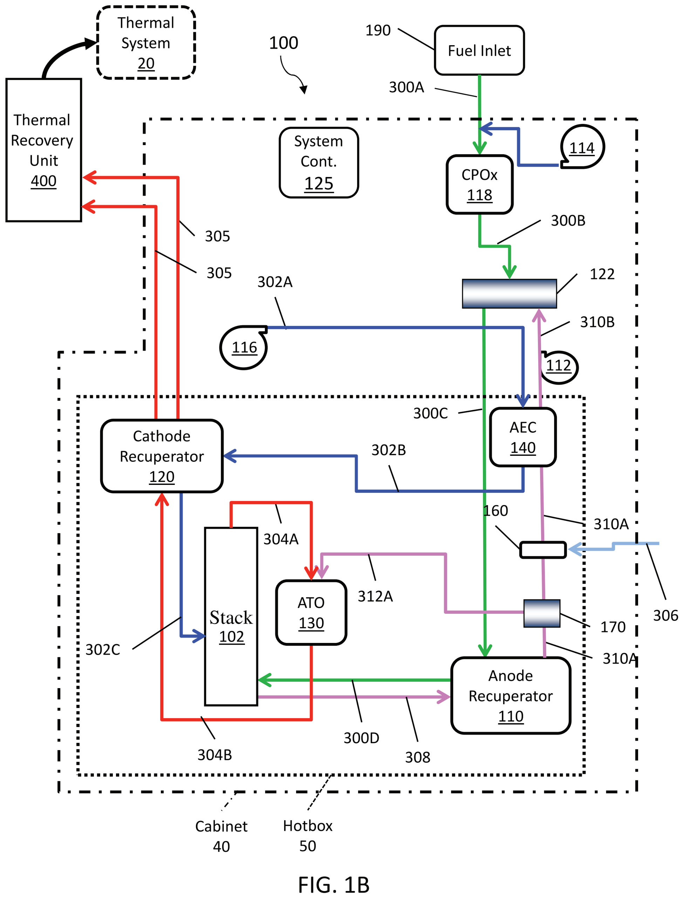

FIG. 1A is a perspective view of an electrochemical cell system 10 that is connected to a heat recovery unit 400, according to various embodiments of the present disclosure, and FIG. 1B is a schematic view of components of a power module 100 included in the system 10. Referring to FIG. 1A, the electrochemical cell system 10 may be a fuel cell system, such as a solid oxide fuel cell system, configured to generate electrical power. However, the electrochemical cell system 10 may alternatively be an electrolyzer system. The heat recovery unit 400 may be configured to provide thermal energy to a thermal system 20 configured to utilize heat generated by the exhaust from the electrochemical cell system 10.

The electrochemical cell system 10 may include one or more power modules 100, fuel processing modules 106, and power conditioning (e.g., electrical output) modules 108, which may be located on a base 12. Each of the modules 100, 106, 108 may include its own housing or cabinet that is accessible by a door. The base 12 may also provide a common space for electrical wiring and/or fluid conduits that may connect the power modules 100 with the fuel processing and/or power conditioning modules 106, 108. For example, the power modules 100 may be fluidly connected with the fuel processing modules 106 through fluid conduits (e.g., pipes) provided in the base 12, and the power conditioning module 108 may be electrically connected to the power modules 100 through wires and/or cables provided in the base 12. The base 12 may be formed of concrete and/or metal, depending on installation location and/or installation requirements.

The fuel processing module 106 may include components used for pre-processing a fuel, such as, for example, adsorption beds (e.g., desulfurizer and/or other impurity adsorption beds). The fuel processing module 106 may be configured to process different types of fuels. For example, the fuel processing module 106 may include at least one of a diesel fuel processing module, a natural gas fuel processing module, or an ethanol fuel processing module in the same cabinet or in separate cabinets. A different bed composition tailored for a particular fuel may be provided in each fuel processing module 106. The fuel processing module 106 may process at least one of the following fuels: natural gas provided from a pipeline, compressed natural gas, methane, propane, liquid petroleum gas, gasoline, diesel, home heating oil, kerosene, JP-5, JP-8, aviation fuel, hydrogen, ammonia, ethanol, methanol, syn-gas, biogas, biodiesel and other suitable hydrocarbon or hydrogen containing fuels (e.g., pure hydrogen or ammonia). In some examples, a reformer may be included in the fuel processing module 106.

The power conditioning module 108 may include components for converting DC power generated by a fuel cell stack included in the power module 100 to AC power (e.g., at least one DC/AC converter and optionally DC/DC converters described in U.S. Patent No. 7,705,490, issued April 27, 2010, the content of which is expressly incorporated herein by reference in its entirety), electrical connectors for AC power output to a power grid, circuits for managing electrical transients, and a system controller (e.g., a computer or dedicated control logic device or circuit). The power conditioning module 108 may be configured to convert DC power from the fuel cell modules to different AC voltages and frequencies. Components for 208V, 60Hz; 480V, 60Hz; 415V, 50Hz and other common voltages and frequencies may be provided. The power conditioning module 108 may be electrically connected with the one or more power modules 100, e.g., via wires provided on, in and/or below the base 12, to provide power to the power modules 100 and receive power generated by the power modules 100.

In some embodiments, the functions of the fuel processing module and the power conditioning module may be combined in a single module, such that the above-described fuel processing and power conditioning components may be located in a single cabinet or housing. While two rows of power modules 100 are shown in FIG. 1, the system 10 may include a single row or multiple rows of power modules 100. For example, the system 10 may include two or more rows of power modules 100 stacked back to back, end to end, side by side, or on top of one another.

The electrochemical cell system 10 may include the heat recovery unit 400 configured recover heat from the system exhaust output of the power modules 100, as discussed in detail below. In particular, the heat recovery unit 400 may be fluidly connected to the power modules 100 by exhaust outlet conduits 305, as described in detail below. The heat recovery unit 400 may be configured to provide hot water or steam to a thermal system 20, such as a steam generator, a thermoelectric generator, a hot water heater, a Rankine cycle device, a combination thereof, or the like. For example, the thermal system 20 may comprise a building hot water distribution system, and the heat recovery unit 400 may comprise a heat exchanger which heats water using heat from the system exhaust output of the power modules 100.

In various embodiments, the system 10 may be located outdoors and system exhaust may be directly vented. Alternatively, the system 10 may be located indoors and the system exhaust may be vented outdoors or provided to a thermal system 20.

Referring to FIG. 1B, each power module 100 may include a module cabinet 40 containing a hotbox 50 and various components located therein or adjacent thereto. The hotbox 50 may contain at least one fuel cell stack 102, such as a solid oxide fuel cell stack, containing alternating fuel cells and interconnects. One solid oxide fuel cell of the stack contains a ceramic electrolyte, such as yttria stabilized zirconia (YSZ), scandia stabilized zirconia (SSZ), scandia and ceria stabilized zirconia or scandia, or yttria and ceria stabilized zirconia, an anode electrode, such as a nickel-YSZ, a nickel-SSZ or nickel-doped ceria cermet, and a cathode electrode, such as lanthanum strontium manganite (LSM). The interconnects may be metal alloy interconnects, such as chromium-iron alloy interconnects. The stacks 102 may be arranged over each other in a column. Alternatively, a column may contain only one stack 102. Plural columns may be located in each hot box 50.

The hotbox 50 may also contain an anode recuperator heat exchanger 110, a cathode recuperator heat exchanger 120, an anode tail gas oxidizer (ATO) 130, an anode exhaust cooler 140, an optional splitter 170, and a water injector 160. The power module 100 may also include an anode recycle blower 112, a catalytic partial oxidation (CPOx) blower 114 (e.g., a CPOx air blower), a system air blower 116 (e.g., main air blower), a CPOx reactor 118, and a mixer 122 which may be located in the cabinet 40 outside of the hotbox 50. However, the present disclosure is not limited to any particular location for each of the components with respect to the hotbox 50.

The power module 100 may include an air conduit assembly 302 comprising air conduits 302A, 302B, and 302C that fluidly connect the system air blower 116, the anode exhaust cooler 140, the cathode recuperator 120, and the stack 102. The power module 100 may also include exhaust conduits 304A and 304B that fluidly connect the stack 102, the ATO 130, and the cathode recuperator 120.

The CPOx reactor 118 may receive a fuel inlet stream from a fuel inlet 190, through fuel conduit 300A. The fuel inlet 190 may be a fuel tank or a utility natural gas line including a valve to control an amount of fuel provided to the CPOx reactor 118. The CPOx blower 114 may provide air to the CPOx reactor 118 during system start-up. The air from the CPOx blower 114 is turned off during system steady-state operation. The fuel and/or air may be provided to the mixer 122 by fuel conduit 300B. Fuel flows from the mixer 122 to the anode recuperator 110 through fuel conduit 300C. The fuel is heated in the anode recuperator 110 by the fuel exhaust (anode exhaust from stack 102) and the fuel then flows from the anode recuperator 110 to the stack 102 through fuel conduit 300D.

The system air blower 116 may be configured to provide an air stream (e.g., air inlet stream) to the anode exhaust cooler 140 through air conduit 302A. Air flows from the anode exhaust cooler 140 to the cathode recuperator 120 through air conduit 302B. The air is heated by the ATO exhaust in the cathode recuperator 120. The air flows from the cathode recuperator 120 to the stack 102 through air conduit 302C.

Anode exhaust (e.g., fuel exhaust) generated in the stack 102 is provided to the anode recuperator 110 through an anode exhaust conduit 308. The anode exhaust may contain unreacted fuel and may also be referred to herein as fuel exhaust. The anode exhaust may be provided from the anode recuperator 110 to the mixer 122 by a recycling conduit 310, which may include a first recycling conduit 310A and a second recycling conduit 310B. In particular, the first recycling conduit 310A may fluidly connect an outlet of the anode recuperator 110 to an inlet of the anode exhaust cooler 140. The second recycling conduit 310B may fluidly connect an outlet of the anode exhaust cooler 140 to an inlet of the mixer 122.

Water flows from a water source, such as a water tank or a water pipe, to the water injector 160 through a water conduit 306. Water treatment processes may be applied to water supplied to water conduit 306 to remove impurities before supplying the water to the power module 100. The water injector 160 may be configured to inject water into anode exhaust flowing through the first recycling conduit 310A. Heat from the anode exhaust (also referred to as a recycled anode exhaust stream) vaporizes the water to generate steam which humidifies the anode exhaust. The humidified anode exhaust is provided to the anode exhaust cooler 140. Heat from the anode exhaust provided to the anode exhaust cooler 140 may be transferred to the air inlet stream provided from the system air blower 116 to the cathode recuperator 120. The cooled humidified anode exhaust may then be provided from the anode exhaust cooler 140 to the mixer 122 via the second recycling conduit 310B. The anode recycle blower 112 may be configured to move the anode exhaust though the second recycling conduit 310B.

The mixer 122 is configured to mix the humidified anode exhaust with fresh fuel (i.e., fuel inlet stream). This humidified fuel mixture may then be heated in the anode recuperator 110 by the anode exhaust, before being provided to the stack 102. The power module 100 may also include one or more fuel reforming catalysts located inside and/or downstream of the anode recuperator 110. The reforming catalyst(s) reform the humidified fuel mixture before it is provided to the stack 102.

The splitter 170 may be operatively connected to the first recycling conduit 310A and may be configured to divert a portion of the anode exhaust to the ATO 130 via an ATO conduit 312A. The ATO conduit 312A may be fluidly connected directly to the ATO 130 or indirectly to the ATO 130 via the cathode exhaust conduit 304A.

Cathode exhaust (e.g., air exhaust) generated in the stack 102 is provided to the ATO 130 by cathode exhaust conduit 304A. The cathode exhaust may be mixed with a portion of the anode exhaust before or after being provided to the ATO 130. The mixture of the anode exhaust and the cathode exhaust may be oxidized in the ATO 130. The oxidized cathode exhaust (i.e., ATO exhaust, which is also referred to as system exhaust) flows from the ATO 130 to the cathode recuperator 120, through cathode exhaust conduit 304B. The system exhaust flows from the cathode recuperator 120 and out of the hotbox 50 through at least one exhaust outlet conduit 305. In one embodiment, the power module 100 may include two exhaust outlet conduits 305 in order to output the system exhaust (which may also be referred to as cathode exhaust or ATO exhaust) from the hotbox 50 rather than a single larger outlet conduit, due to system size constraints. However, the present disclosure is not limited to any particular number of outlet conduits, and a single outlet conduit may be used instead.

The exhaust outlet conduits 305 may be configured to provide the system exhaust to the heat recovery unit 400. The heat recovery unit 400 may optionally be configured to vent the system exhaust to the atmosphere after the system exhaust exchanges heat with a fluid (e.g., water) used in the thermal system 20.

The power module 100 may further include a system controller 125 configured to control various elements of the power module 100. The controller 125 may include a central processing unit configured to execute stored instructions. For example, the controller 125 may be configured to control fuel and/or air flow through the power module 100, according to fuel composition data.

Referring to FIG. 1B, each power module 100 may include fluidly connected conduit assemblies 302, 304 that fluidly connect system components, such as the system air blower (i.e., main air blower) 116, anode exhaust cooler 140, the cathode recuperator 120, the stack 102, and/or the ATO 130 to the thermal recovery unit 400. Accordingly, components of the power modules 100 may be affected by downstream pressure in the thermal recovery unit 400.

For example, in some embodiments a positive pressure may be generated in the thermal recovery unit 400 due to system exhaust flow from the power modules 100 into the thermal recovery unit 400 and/or a static pressure within the thermal recovery unit 400. A pressure drop generated by the thermal system 20 may also contribute to generating a positive pressure in the thermal recovery unit 400.

During steady-state operation of the system 10, one or more of the power modules 100 may be offline, for example for servicing or for an emergency shutdown, and the system air blower 116 of the offline power module 100 may be stopped. As a result, backflow of the system exhaust from the heat recovery unit 400 into the offline power module 100 may occur if the system exhaust is not segregated in the heat recovery unit 400. The system exhaust backflow may expose the system air blower 116 to temperatures that may exceed the rated temperature thereof. For example, the bearings of the system air blower 116 may be damaged by temperatures that exceed about 130 °C. As such, the system air blower 116 may be damaged by exposure to relatively hot system exhaust from the thermal recovery unit 400.

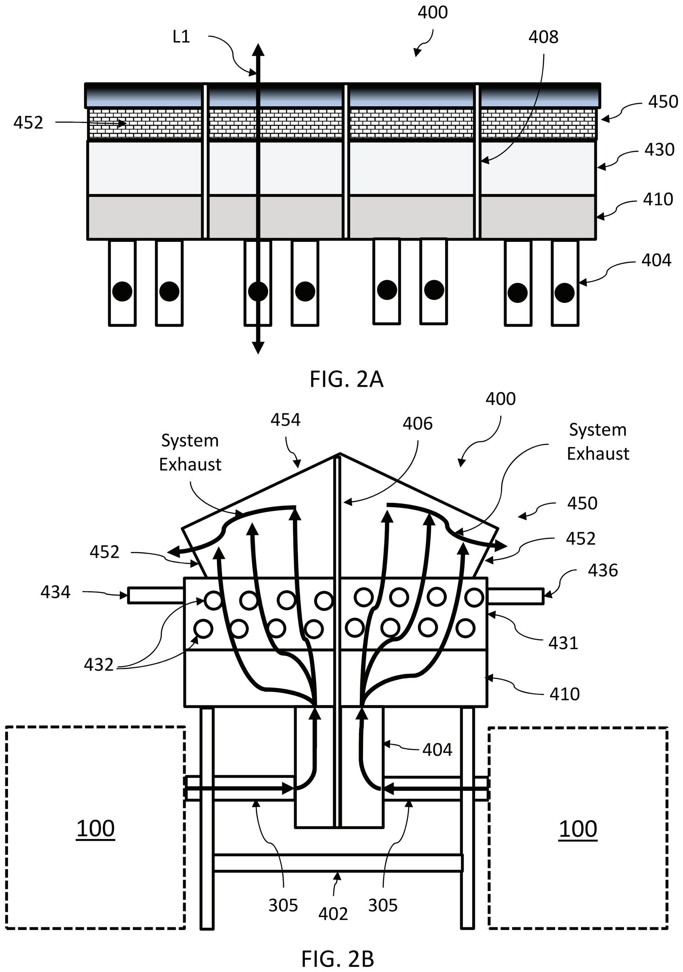

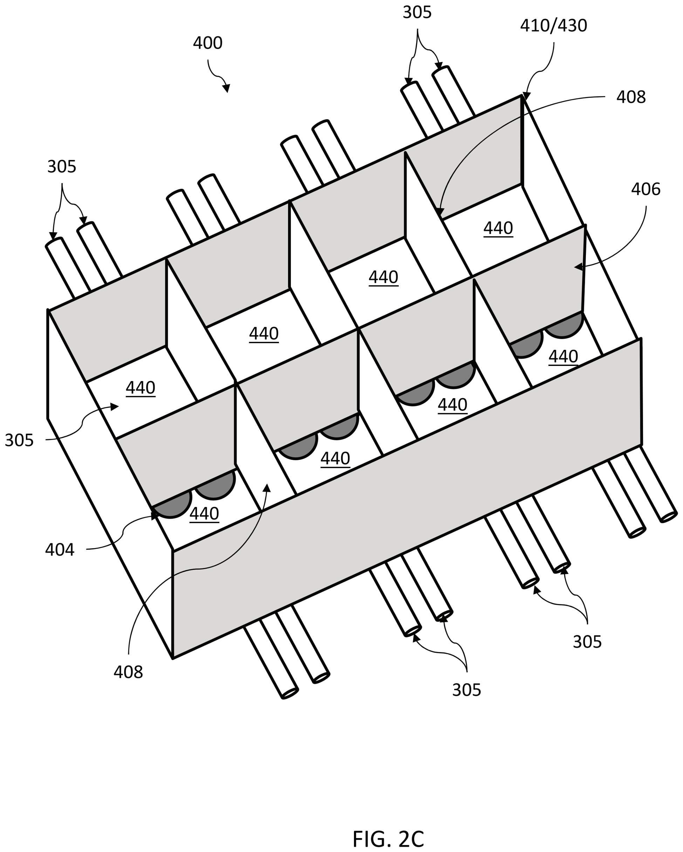

FIG. 2A is a side view of a heat recovery unit 400, according to various embodiments of the present disclosure, FIG. 2B is a cross-sectional view taken along line L1 of FIG. 2A, and FIG. 2C is a perspective view showing elements of the heat recovery unit 400 of FIG. 2A. The heat recovery unit 400 includes system exhaust backflow prevention elements which prevent system exhaust emitted by opening power modules 100 from backflowing into power modules 100 that are offline through the heat recovery unit 400.

Referring to FIGS 2A-2C, the heat recovery unit 400 may include an optional support frame 402, exhaust collection conduits 404, an exhaust manifold 410 fluidly connected to the exhaust collection conduits 404, a heat exchanger 430 disposed over the exhaust manifold 410, and a cover assembly 450 disposed over the heat exchanger 430. The exhaust manifold 410 may be open at the top or include openings in its top surface. The heat exchanger 430 may be open on the bottom or may include openings in its bottom surface which are located over the openings in the top surface of the exhaust manifold 410. The thermal recovery unit 400 may be disposed above and between rows of the power modules 100. In some embodiments, the thermal recovery unit 400 may be disposed on the support frame 402 located between adjacent rows of power modules 100 and configured to support the heat recovery unit 400 above the power modules 100.

System exhaust may be output from the power modules 100 to the exhaust collection conduits 404 via the exhaust outlet conduits 305. The exhaust collection conduits 404 may be configured to provide the system exhaust to the exhaust manifold 410. The system exhaust may then flow upwards through the exhaust manifold 410 and enter the heat exchanger 430. The heat exchanger 430 may include a housing 431 in which one or more heat exchange conduits 432 is disposed. As described above, the housing 431 may be open on the bottom or may include openings in its bottom surface. The heat exchange conduit(s) 432 may be configured to circulate a heat exchange fluid, such as water or the like, through the housing 431.

The system exhaust may flow past the heat exchange conduit(s) 432 to heat the heat exchanger fluid (e.g., water) flowing therethrough by extracting heat from the system exhaust. In particular, relatively cold water may be provided to the heat exchange conduit(s) 432 through an inlet conduit (e.g., pipe or manifold) 434 and hot water and/or steam may be output from the heat exchange conduit(s) 432 to an outlet conduit (e.g., pipe or manifold) 436. The outlet conduit 436 may fluidly connect the heat exchange conduit(s) 432 to a thermal system 20 (see FIG. 1A). In some embodiments, the heat exchange conduit(s) 432 may be corrugated or finned conduits to increase heat exchange efficiency.

System exhaust may then flow upwards from the heat exchanger 430 and into the cover assembly 450. The cover assembly 450 may be configured to direct system exhaust laterally out of the heat recovery unit 400. In particular, the cover assembly 450 may include vents 452 and a cover 454. The vents 452 may include configured to prevent debris from entering the thermal recovery unit 400. The cover 454 may be sloped reduce precipitation and/or debris from entering the thermal recovery unit 400.

In order to prevent system exhaust backflow from the thermal recovery unit 400 to an offline power module 100, the thermal recovery unit 400 may include separation baffles 406, 408. The separation baffles include a first baffle 406 and second baffles 408. The first baffle 406 may extend through the thermal recovery unit 400 in a lengthwise direction (e.g., parallel to the power module 100 row direction) to divide the exhaust collection conduits 404, the exhaust manifold 410, the heat exchanger 430, and the cover assembly 450 along the lengthwise direction. As such, the system exhaust from a first row of power modules 100 may be provided to only a first side of the thermal recovery unit 400, and the system exhaust from a second row of power modules 100 may be provided to only a second side of the thermal recovery unit 400. The second baffles 408 may extend through the thermal recovery unit 400 in a widthwise direction perpendicular to the lengthwise direction. The second baffles 408 further divide the exhaust manifold 410, the heat exchanger 430, and the cover assembly 450 into separate exhaust chambers 440, as shown in FIG. 2C. As such, the system exhaust from each power module 100 may be provided to a corresponding single exhaust chamber 440 comprising vertically overlapping portions of the corresponding exhaust collection conduits 404, the exhaust manifold 410, the heat exchanger 430, and the cover assembly 450. Each exhaust chamber 440 is bounded by walls comprising a portion of the first baffle 406, at least one second baffle 408 and at least one outer side wall of the heat recovery unit 400. The exhaust chambers 440 segregate system exhaust streams received from each power module 100. As such, the walls of the exhaust chambers 440 (e.g., the separation baffles) are configured to reduce or prevent system exhaust backflow from active power module(s) 100 to offline power module(s) 100 by separating the system exhaust streams from each power module 100 to a single corresponding exhaust chamber 440.

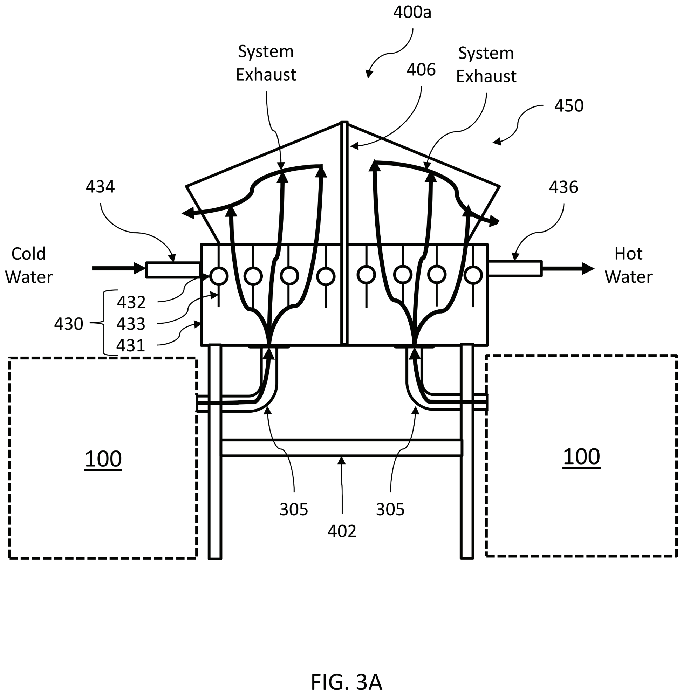

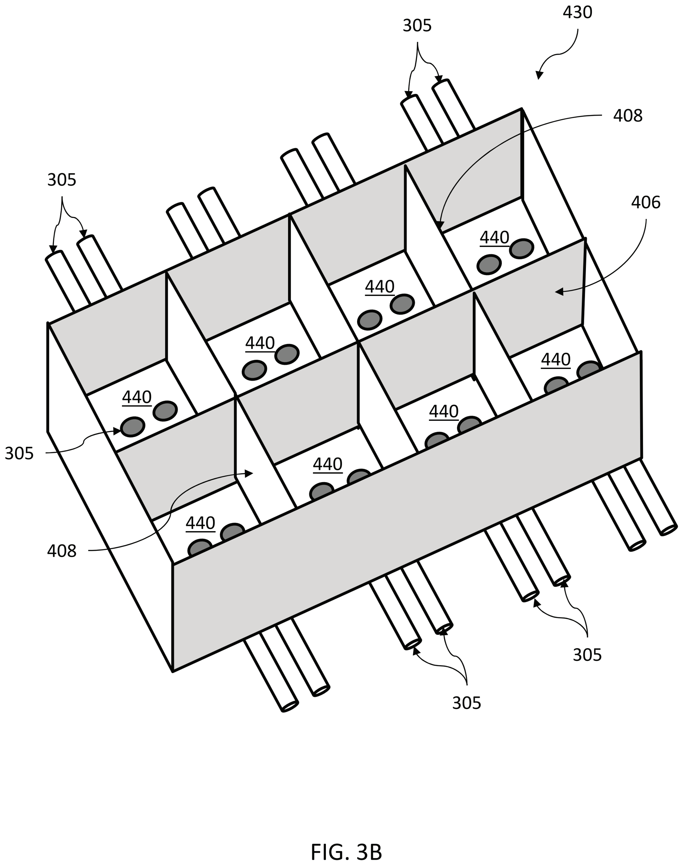

FIG. 3A is a cross-sectional view of a modified heat recovery unit 400a, according to another embodiment of the present disclosure, and FIG. 3B is a perspective view showing elements of the thermal recovery unit 400a of FIG. 3A. The thermal recovery unit 400a may be similar to the thermal recovery unit 400. As such, only the differences therebetween will be discussed in detail.

Referring to FIGS 3A and 3B, the thermal recovery unit 400a may omit one or both of the exhaust collection conduits 404 and the exhaust manifold 410. As such, the first baffle 406 and the second baffles 408 may extend through the heat exchanger 430 and the cover assembly 450 to form the exhaust chambers 440. The exhaust outlet conduits 305 may be connected directly to the bottom of the heat exchanger 430. For example, each exhaust chamber 440 may be connected to a power module 100 by two corresponding exhaust outlet conduits 305. However, in some embodiments, each power module 100 may be connected to a corresponding exhaust chamber 440 by a single exhaust outlet conduit 305. System exhaust provided by the exhaust outlet conduits 305 may be dispersed in the heat exchanger 430 below the heat exchange conduit(s) 432 before moving upwards past the exchange conduit(s) 432. In some embodiments, the heat exchange conduit(s) 432 may include fins 433 to improve heat transfer efficiency and/or system exhaust flow uniformity.

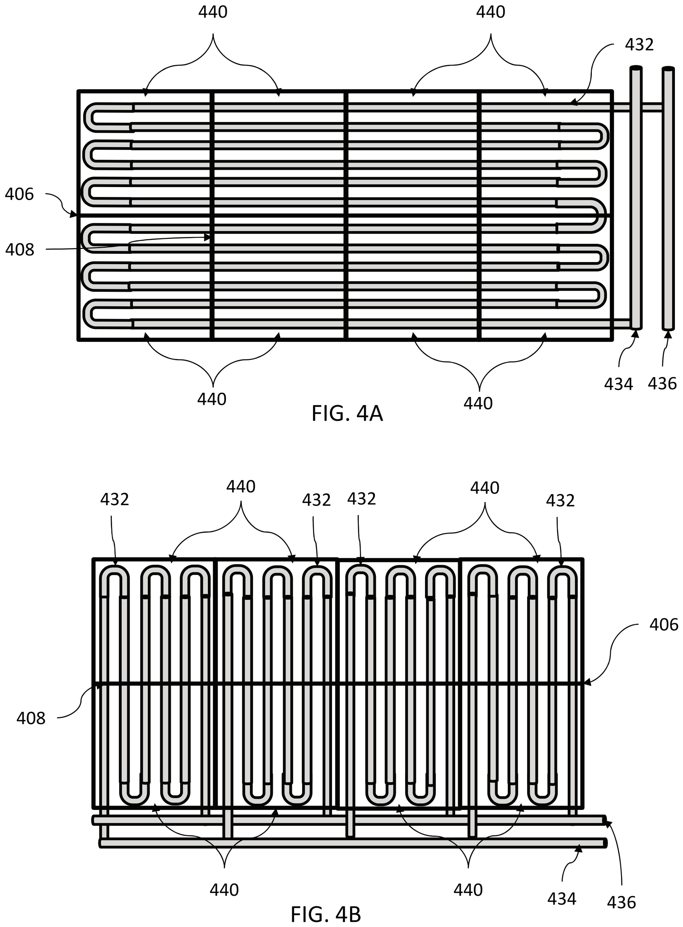

FIG. 4A is a top view showing heat exchange conduits 432 and exhaust chambers 440, according to various embodiments of the present disclosure, and FIG. 4B is a top view showing exhaust chambers 440 and heat exchange conduits 432 having an alternative configuration, according to various embodiments of the present disclosure.

Referring to FIGS. 4A and 4B, the exhaust chambers 440 may be at least partially defined by the first baffle 406 and the second baffles 408 and may be formed within the exhaust collection conduits 404, the exhaust manifold 410, the heat exchanger 430, and/or the cover assembly 450, as described above.

Referring to FIG. 4A, a single heat exchange conduit 432 may extend in a serpentine pattern through each of the exhaust chambers 440. In particular, the heat exchange conduit 432 may extend through the second baffles 408 in a direction parallel to the first baffle 406, and though the first baffle 406 in a direction parallel to the second baffles 408. The heat exchange conduit 432 may receive cold water from the inlet conduit 434 and may output hot water and/or steam to the outlet conduit 436.

In other embodiments, two or more heat exchange conduits 432 may be used, as shown in FIG. 4B. For example, a first heat exchange conduit 432 may extend through a first row of the exhaust chambers 440 and a second heat exchange conduit 432 may extend through a second row of the exhaust chambers 440. As shown in FIG. 4B, heat exchange conduits 432 may extend in a serpentine pattern through pairs of adjacent exhaust chambers 440. In particular, the heat exchange conduits 432 may extend through the first baffle 406 in a direction parallel to the second baffles 408. The heat exchange conduits 432 may each receive cold water from the inlet conduit 434 and may output hot water and/or steam to the outlet conduit 436. Accordingly, the heat exchange conduits 432 may be fluidly connected in parallel to the inlet and outlet conduits 434, 436. However, in other embodiments the heat exchange conduits 432 may alternatively be fluidly connected in series to the inlet and outlet conduits 434, 436.

In some embodiments, the heat exchange conduits 432 may include corrugations or fins to increase heat transfer efficiency. In some embodiments, the fins of the finned heat exchange conduits 432 may form at least a portion of the first baffle 406. In other embodiments, the fins of the finned heat exchange conduits 432 may form at least a portion of the second baffles 408. In various embodiments, a single heat exchange conduit 432 may extend through all of the exhaust chambers 440, or each of the exhaust chambers 440 may include a separate heat exchange conduit 432.

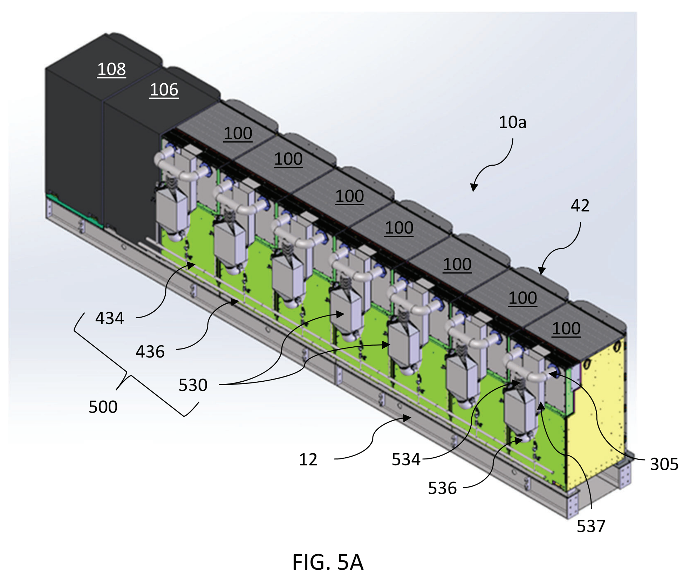

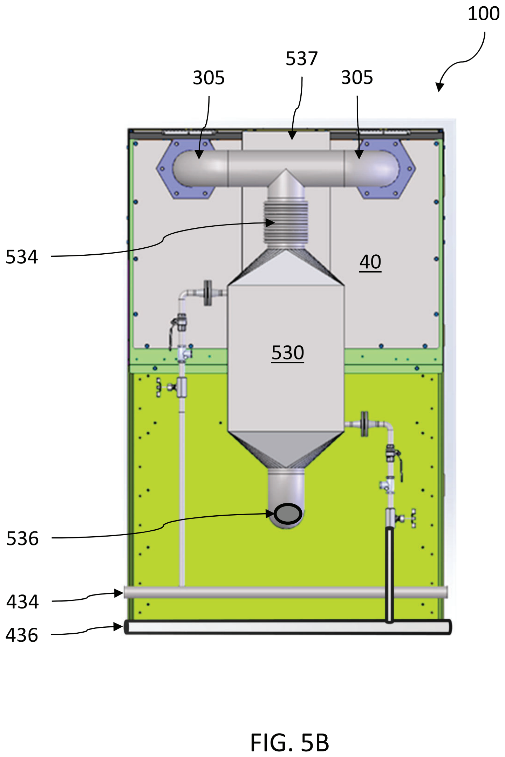

FIG. 5A is a perspective view of an alternative electrochemical cell system 10a, according to various embodiments of the present disclosure, and FIG. 5B shows the backside of a power module 100 of FIG. 5A. The system 10a includes a separate heat exchanger 530 for each power module 100. The system 10a may be similar to the system 10 of FIGS. 1A and 1B. As such, only the differences therebetween will be discussed in detail.

Referring to FIGS. 5A and 5B, the system 10a may include one or more power modules 100, fuel processing modules 106, and power conditioning (e.g., electrical output) modules 108, which may be located on a base 12. The system 10a may also include a heat recovery unit 500 comprising heat exchangers 530, an inlet conduit 434, and an outlet conduit 436. In this embodiment, there is one heat exchanger 530 for each power module 100, and the heat exchanger 530 is fluidly connected to exhaust outlet conduit(s) 305 of only one respective power module 100, to prevent system exhaust output from operating power module(s) 100 from backflowing into offline power module(s) 100.

In this embodiment, the heat exchangers 530 may be disposed on the backside of each power module 100. In particular, each heat exchanger 530 may be disposed on the backside of a power module cabinet 40, opposite to an access door 42 located on the front side of the cabinet 40. The exhaust outlet conduits 305 of a corresponding power module 100 may be connected to each respective heat exchanger 530 by an expansion conduit 534 containing a bellows configured to reduce thermal expansion stress on the components of the system 10a. The heat exchangers 530 may include a backside exhaust outlet conduit 536 and the heat exchange conduit 432 (not shown) as described above. The backside exhaust outlet conduit 536 fluidly connects the bottom of the respective heat exchanger 530 to the bottom of a vertically extending exhaust manifold 537. In one embodiment, the exhaust manifold 537 is located between the back of the power module cabinet 40 and the heat exchanger 530. The exhaust manifold 537 upwardly vents the system exhaust exiting the heat exchanger 530 to the atmosphere above the top of the cabinet 40.

The heat exchangers 530 may each be independently fluidly connected to the inlet conduit 434 and to the outlet conduit 436. Accordingly, the heat exchangers 530 may be fluidly connected in parallel to the inlet and outlet conduits 434, 436. However, in other embodiments the heat exchanger 530 may alternatively be fluidly connected in series to the inlet and outlet conduits 434, 436. Optional flow control valves may be located on the inlet and/or outlet conduits 434, 436. The outlet conduit 436 may be fluidly connected to a thermal system 20 as described above. Accordingly, the heat exchangers 530 may be configured to heat a heat transfer fluid, such as water, provided by the inlet conduit 434 and may provide hot water and/or steam to the outlet conduit 436.

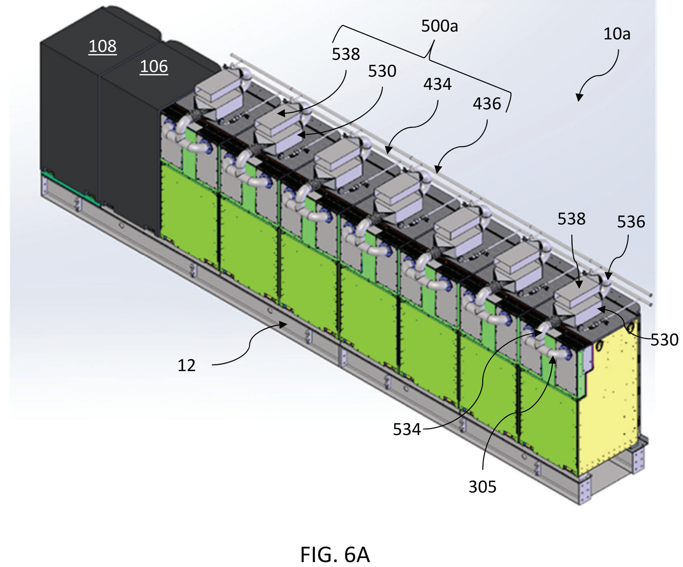

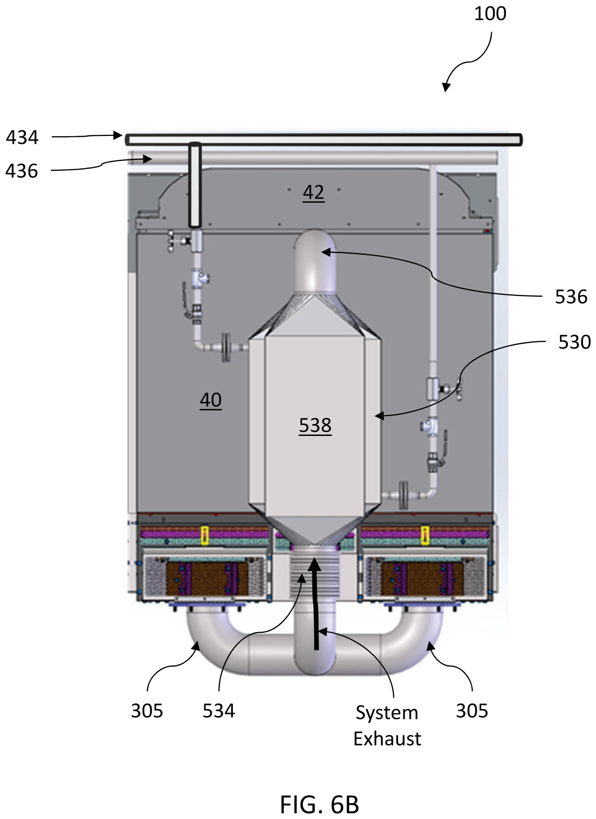

FIG. 6A is a perspective view showing an electrochemical cell system 10a including an alternative heat recovery unit 500a, according to another alternative embodiment of the present disclosure, and FIG. 6B shows the top of a power module 100 of FIG. 6A. In this embodiment, the heat exchangers 530 are disposed on top of the power modules 10. The heat recovery unit 500a may be similar to the heat recovery unit 500. As such, only the differences therebetween will be discussed in detail.

Referring to FIGS. 6A and 6B, the system 500a may include the heat exchangers 530, the inlet conduit 434, the outlet conduit 436, and an exhaust deflector 538. One heat exchanger 530 may be disposed on top of the respective power modules 100. In particular, each heat exchanger 530 may be disposed on top of the respective power module cabinet 40. An exhaust deflector 538 may be disposed on top of each heat exchanger 530. The exhaust deflectors 538 may be configured to deflect exhaust output from the heat exchangers 530 toward the backsides of the power modules 100 and away from the access doors 42. In one embodiment, the exhaust deflectors 538 may comprise horizontal manifolds which are provided instead of the vertical manifolds 537 described above with respect to FIGS. 5A and 5B.

Exhaust outlet conduits 305 may be connected to each heat exchanger 530 by the expansion conduit 534. In this embodiment, the expansion conduit 534 may be a curved conduit. The heat exchangers 530 may each be independently fluidly connected to the inlet conduit 434 and to the outlet conduit 436. The outlet conduit 436 may be fluidly connected to the thermal system 20 as described above. Accordingly, the heat exchangers 530 may be configured to heat a fluid, such as water, provided by the inlet conduit 434 and may provide hot water and/or steam to the outlet conduit 436.

A method of operating an electrochemical cell system 10 or 10a of various embodiments includes operating a plurality of power modules 100 each containing at least one stack of electrochemical cells 102, and outputting a system exhaust from each of the plurality of power modules. The method also includes providing the system exhaust from each of the plurality of the power modules 100 to a respective exhaust compartment to exchange heat with a heat exchange fluid, and venting the system exhaust from the respective exhaust compartment to atmosphere.

In one embodiment, the at least one stack of electrochemical cells 102 comprises a plurality of stacks of fuel cells, and the step of operating the plurality of the power modules 100 comprises providing air and fuel to the plurality of stacks of fuel cells 102 to generate fuel and air exhaust streams in each of the plurality of power modules 100. The fuel exhaust stream is oxidized by the air exhaust stream in a respective ATO 130 located in each of the plurality of power modules 100. The system exhaust comprises an exhaust stream output from the ATO 130 located in each of the plurality of power modules 100.

In the embodiment of operating the system 10a, each of the exhaust compartments comprises a respective heat exchanger 530 mounted to the respective one of the plurality of the power modules 100 (e.g., mounted to a respective cabinet 40 of the respective power module 100). An offline power module 100 is located on a same base 12 as the plurality of the power modules 100 that are operating. An additional heat exchanger 530 is mounted to and fluidly connected (e.g., via conduits 305 and 534) to the offline power module 100. The heat exchangers 530 that mounted to the plurality of the power modules 100 that are operating are not fluidly connected to the additional heat exchanger 530, to prevent backflow of the system exhaust to the offline power module 100.

In the embodiment of operating the system 10, the exhaust compartments comprise compartments 440 inside a common heat exchanger housing 431 that are separated from each other by baffles 406, 408. An offline power module 100 is located on a same base 12 as the plurality of the power modules 100 that are operating. The offline power module 100 is fluidly connected to an additional one of the compartments 440 in the heat exchanger housing 431. The baffles 406, 408 prevent backflow of the system exhaust from the exhaust compartments 440 that are fluidly connected to the plurality of the power modules 100 that are operating into the offline power module 100 through the additional one of the compartments 440.

According to various embodiments, the heat recovery units include exhaust compartments configured to segregate system exhaust output from corresponding power modules to the respective heat exchangers 430, 530. The exhaust segregation reduces or prevents exhaust backflow from operating power module(s) into offline power module(s), and thereby reduces or prevents power module damage.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

## Claims

1. An electrochemical cell system, comprising:
power modules comprising one or more stacks of electrochemical cells;
heat exchangers fluidly connected to exhaust outlet conduits of the respective power modules, wherein each heat exchanger is fluidly connected only to one of the power modules, and each heat exchanger is configured to receive system exhaust output only by one of the power modules;
an inlet conduit configured to provide a relatively cold fluid to the heat exchangers; and
an outlet conduit configured to receive a relatively hot fluid from the heat exchangers.

2. The electrochemical cell system of claim 1, wherein the heat exchangers are disposed on top of each of the power modules.

3. The electrochemical cell system of claim 2, further comprising exhaust deflectors disposed on top of the heat exchangers and configured to direct system exhaust output from the heat exchangers toward backsides of the power modules.

4. The electrochemical cell system of claim 1, wherein the heat exchangers are disposed on backsides of the power modules.

5. The electrochemical cell system of claim 4, further comprising vertical exhaust manifolds fluidly connected to the heat exchangers and configured to vent the system exhaust from the heat exchangers upwards over top of the power modules.

6. The electrochemical cell system of claim 1, wherein the outlet conduit is fluidly connected to a thermal system and configured to provide the heated fluid to the thermal system.

7. The electrochemical cell system of claim 1, wherein the thermal system comprises a building hot water distribution system, the relatively cold fluid comprises liquid water and the relatively hot fluid comprises heated liquid water or steam.

8. The electrochemical cell system of claim 1, further comprising expansion conduits containing a bellows which fluidly connect the exhaust outlet conduits to the heat exchangers.

9. The electrochemical cell system of claim 1, wherein:
the one or more stacks of electrochemical cells comprises a plurality of stacks of fuel cells; and
the heat exchangers are fluidly connected to the inlet and outlet conduits in parallel or in series.

10. The electrochemical cell system of claim 1, wherein each heat exchanger comprises an exhaust compartment fluidly connected to at least one exhaust outlet conduit of only one of the power modules, and at least one heat exchange conduit extending through the exhaust compartment.

11. A method of operating an electrochemical cell system, comprising:
operating a plurality of power modules each containing at least one stack of electrochemical cells, and outputting a system exhaust from each of the plurality of power modules;
providing the system exhaust from each of the plurality of the power modules to a respective exhaust compartment to exchange heat with a heat exchange fluid; and
venting the system exhaust from the respective exhaust compartment to atmosphere.

12. The method of claim 11, wherein:
the at least one stack of electrochemical cells comprises a plurality of stacks of fuel cells;
the operating the plurality of the power modules comprises providing air and fuel to the plurality of stacks of fuel cells to generate fuel and air exhaust streams in each of the plurality of power modules;
the fuel exhaust stream is oxidized by the air exhaust stream in a respective anode tail gas oxidizer (ATO) located in each of the plurality of power modules; and
the system exhaust comprises an exhaust stream output from the ATO located in each of the plurality of power modules.

13. The method of claim 12, wherein:
each of the exhaust compartments comprises a respective heat exchanger mounted to the respective one of the plurality of the power modules;
an offline power module is located on a same base as the plurality of the power modules that are operating;
an additional heat exchanger is mounted to and fluidly connected to the offline power module; and
the heat exchangers mounted to the plurality of the power modules that are operating are not fluidly connected to the additional heat exchanger, to prevent backflow of the system exhaust to the offline power module.

14. The method of claim 12, wherein:
the exhaust compartments comprise compartments inside a common heat exchanger housing that are separated from each other by baffles;
an offline power module is located on a same base as the plurality of the power modules that are operating;
the offline power module is fluidly connected to an additional one of the compartments; and
the baffles prevent backflow of the system exhaust from the exhaust compartments that are fluidly connected to the plurality of the power modules that are operating through the additional one of the compartments into the offline power module.
